# EUROPEAN PATENT APPLICATION

(11) **EP 3 522 588 A1**
(43) Date of publication of application: **07.08.2019**
(21) Application number: 17855534.8
(22) Date of filing: 29.08.2017
(51) Int. Cl.: H04W 24/10, H04L 1/16, H04L 27/00, H04L 27/34, H04W 28/04, H04W 72/04

(54) **TERMINAL DEVICE, BASE STATION DEVICE, COMMUNICATION METHOD, AND INTEGRATED CIRCUIT**

(30) Priority: 29.09.2016 JP 2016191049
(71) Applicant: Sharp Kabushiki Kaisha, Sakai City, Osaka 590-8522 (JP); FG INNOVATION COMPANY LIMITED, Hong Kong (CN)
(72) Inventor: YOSHIMURA Tomoki, Sakai City, Osaka 590-8522 (JP); SUZUKI Shoichi, Sakai City, Osaka 590-8522 (JP); OUCHI Wataru, Sakai City, Osaka 590-8522 (JP); LIU Liqing, Sakai City, Osaka 590-8522 (JP); IMAMURA Kimihiko, Sakai City, Osaka 590-8522 (JP)
(74) Representative: Müller-Boré & Partner Patentanwälte PartG mbB
(86) International application number: PCT/JP2017/030974
(87) International publication number: WO 2018/061576

(57) **Abstract**

A terminal apparatus includes a reception unit configured to receive a common channel, a decoding unit configured to generate an acknowledgement response based on whether a transport block in the common channel has been successfully decoded, and a transmission unit configured to transmit uplink control information including the acknowledgement response. Whether the uplink control information includes reception quality information is given at least based on the acknowledgement response, and the reception quality information is given based on a signal received by the reception unit.

## Description

### Technical Field

The present invention relates to a terminal apparatus, a base station apparatus, a communication method, and an integrated circuit.

This application claims priority based on JP 2016-191049 filed on September 29, 2016, the contents of which are incorporated herein by reference.

### Background Art

A radio access method and a radio network for cellular mobile communications (hereinafter, referred to as "Long Term Evolution (LTE)", or "Evolved Universal Terrestrial Radio Access (EUTRA)") have been studied in the 3rd Generation Partnership Project (3GPP). In LTE, a base station apparatus is also referred to as an evolved NodeB (eNodeB), and a terminal apparatus is also referred to as a User Equipment (UE). LTE is a cellular communication system in which multiple areas are deployed in a cellular structure, with each of the multiple areas being covered by a base station apparatus. A single base station apparatus may manage a plurality of cells.

In the 3GPP, a next generation standard (New Radio (NR)) has been studied to be proposed in IMT (International Mobile Telecommunication)-2020 as a standard for a next generation mobile communication system formulated by the International Telecommunication Union (ITU) (Non Patent Literature 1). The NR requires that a single technical framework should satisfy requirements that assume the following three scenarios: enhanced Mobile BroadBand (eMBB), massive Machine Type Communication (mMTC), and Ultra Reliable and Low Latency Communication (URLLC)).

### Citation List

### Non Patent Literature

Non Patent Literature 1: "New SID proposal: Study on New Radio Access Technology", RP-160671, NTT docomo, 3GPP TSG RAN Meeting#71, Goteborg, Sweden, 7th - 10th March, 2016.

### Summary of Invention

### Technical Problem

An aspect of the present invention provides a base station apparatus capable of efficient reception, a communication method used for the base station apparatus, an integrated circuit implemented on the base station apparatus, a terminal apparatus capable of efficient transmission, a communication method used for the terminal apparatus, and an integrated circuit implemented on the terminal apparatus.

### Solution to Problem

(1) A first aspect of the present invention provides a terminal apparatus including a reception unit configured to receive a common channel, a decoding unit configured to generate an acknowledgement response based on whether a transport block in the common channel has been successfully decoded, and a transmission unit configured to transmit uplink control information including the acknowledgement response. Whether the uplink control information includes reception quality information is given at least based on the acknowledgement response, and the reception quality information is given based on a signal received by the reception unit.
(2) A second aspect of the present invention provides a base station apparatus including a transmission unit configured to transmit a common channel including a transport block to a terminal apparatus, and a reception unit configured to receive uplink control information including an acknowledgement response corresponding to the transport block from the terminal apparatus. Whether the uplink control information includes reception quality information is given based on the acknowledgement response, and the reception quality information is given based on a signal received by the terminal apparatus.
(3) A third aspect of the present invention provides a communication method used for a terminal apparatus, the communication method including the steps of: receiving a common channel, generating an acknowledgement response based on whether a transport block in the common channel has been successfully decoded, and transmitting uplink control information including the acknowledgement response. Whether the uplink control information includes reception quality information is given at least based on the acknowledgement response, and the reception quality information is given based on a signal received.
(4) A fourth aspect of the present invention provides a communication method used for a base station apparatus, the communication method including the steps of: transmitting a common channel including a transport block to a terminal apparatus, and receiving uplink control information including an acknowledgement response corresponding to the transport block from the terminal apparatus. Whether the uplink control information includes reception quality information is given based on the acknowledgement response, and the reception quality information is given based on a signal received by the terminal apparatus.
(5) A fifth aspect of the present invention provides an integrated circuit implemented on a terminal apparatus, the integrated circuit including: a reception circuit configured to receive a common channel, a decoding circuit configured to generate an acknowledgement response based on whether a transport block in the common channel has been successfully decoded, and a transmission circuit configured to transmit uplink control information including the acknowledgement response. Whether the uplink control information includes reception quality information is given at least based on the acknowledgement response, and the reception quality information is given based on a signal received by the reception circuit.
(6) A sixth aspect of the present invention provides an integrated circuit implemented on a base station apparatus, the integrated circuit including: a transmission circuit configured to transmit a common channel including a transport block to a terminal apparatus, and a reception circuit configured to receive uplink control information including an acknowledgement response corresponding to the transport block from the terminal apparatus. Whether the uplink control information includes reception quality information is given based on the acknowledgement response, and the reception quality information is given based on a signal received by the terminal apparatus.

### Advantageous Effects of Invention

According to one aspect of the present invention, a base station apparatus and a terminal apparatus efficiently communicate with each other.

### Brief Description of Drawings

FIG. 1 is a diagram illustrating a concept of a radio communication system according to the present embodiment.
FIG. 2 is a schematic block diagram illustrating a configuration example of a terminal apparatus 1 according to the present embodiment.
FIG. 3 is a schematic block diagram illustrating a configuration example of a base station apparatus 3 according to the present embodiment.
FIG. 4 illustrates an example of a reception acknowledgement response allocated to code points according to the present embodiment.
FIG. 5 illustrates an example of reception quality information allocated to code points according to the present embodiment.
FIG. 6 illustrates an example of uplink control information allocated to code points according to the present embodiment.
FIG. 7 illustrates an example of uplink control information allocated to code points according to the present embodiment.
FIG. 8 is a diagram illustrating relationship between uplink control information and modulation according to the present embodiment.
FIG. 9 is a sequence chart illustrating an example of operation procedure of the terminal apparatus 1 and the base station apparatus 3 according to the present embodiment.
FIG. 10 is a sequence chart illustrating an example of operation procedure of the terminal apparatus 1 and the base station apparatus 3 according to the present embodiment.
FIG. 11 is a sequence chart illustrating an example of operation procedure of the terminal apparatus 1 and the base station apparatus 3 according to the present embodiment.

### Description of Embodiments

Embodiments of the present invention will be described below.

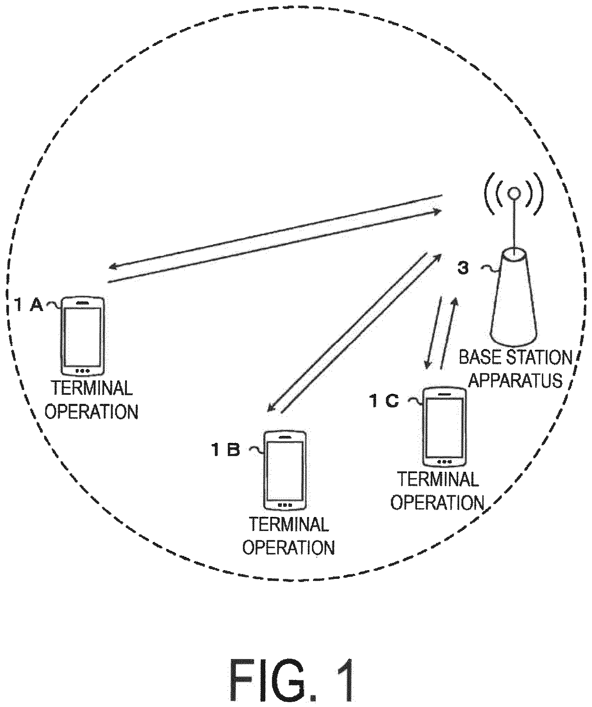

FIG. 1 is a conceptual diagram of a radio communication system according to one aspect of the present embodiment. In FIG. 1, a radio communication system includes terminal apparatuses 1A to 1C and a base station apparatus 3. Hereinafter, the terminal apparatuses 1A to 1C are each also referred to as a terminal apparatus 1.

Hereinafter, a radio parameter (or Numerology) according to one aspect of the present embodiment is described. The radio parameter and the Numerology may be used as terms indicating a set of a plurality of radio parameters or as terms indicating a single radio parameter. The radio parameter and the Numerology may be at least one of Sub-Carrier Spacing (SCS), symbol length, sub-frame length, slot length, frame length, and the like.

Sub-Carrier Spacing may be given at least two spacings: Reference Sub-Carrier Spacing (Reference SCS, Reference Numerology, and the like) and Actual Sub-Carrier Spacing (Actual SCS, Actual Numerology, and the like) applied to radio communications. Reference SCS may be used for determining a radio parameter. Actual SCS may be used for determining a radio parameter, (a) Reference SCS may be used for determining a first radio parameter, (b) Actual SCS may be used for determining a second radio parameter, and (c) Reference SCS and Actual SCS may both be used for determining a third radio parameter. Reference SCS and Actual SCS may be same as or different from each other. Reference SCS may be given at least based on (a) a band to which a cell corresponding to Reference SCS belongs, (b) a carrier frequency of a cell corresponding to Reference SCS, and/or (c) a signal received in the cell corresponding to Reference SCS. Actual SCS may be given at least based on (a) the signal received in the cell corresponding to Reference SCS, (b) information about information in Radio Resource Configuration (RRC) signaling, (c) information about information in MAC Control Element (MCE), and/or (d) information (downlink control information) about a physical layer.

The symbol length may be defined as a minimum unit of a physical resource determined in accordance with a transmission scheme. For example, the symbol length may be the length of an OFDM symbol, in a case where the transmission scheme is an Orthogonal Frequency Division Multiplexing (OFDM) scheme or an Orthogonal Frequency Division Multiple Access (OFDMA) scheme. The "case where the transmission scheme is an OFDM" may include a case where filtering, windowing (processing using a window function), precoding, and/or phase rotation, or the like is applied to the OFDM transmission scheme for the purpose of waveform shaping, PAPR reduction, reduction of radiation outside a predetermined frequency band, or for any other purpose. Specifically, the "case where the transmission scheme is an OFDM" may include Single-Carrier Frequency Division Multiple Access (SC-FDMA) scheme, Discrete Frequency Transform - Spread - OFDM (DFT-S-OFDM) scheme, Filtered - OFDM (F-OFDM) scheme, Universal Filtered Multi-Carrier (UFMC) scheme, and the like. The "case where the transmission scheme is an OFDM" further includes a transmission scheme for a single carrier.

A sub-frame configuration may be given based on Reference SCS. For example, the sub-frame length may be given based on the symbol length given based on Reference SCS. For example, the sub-frame length may be given based on the symbol length given based on Reference SCS and a predetermined number of symbols. For example, the sub-frame length may be 1 ms in a case where the predetermined number of symbols is 14 and Reference SCS is configured to be 15 kHz. The sub-frame may be a value indicating a Transmission Interval (TI). The sub-frame may be a unit used for managing a physical resource in a higher layer. The first radio parameter may include the sub-frame length.

A configuration of a slot may be given based on Reference SCS and Actual SCS. For example, the number of OFDM symbols in a slot may be given based on Reference SCS and Actual SCS. For example, the number y of OFDM symbols in a slot may be the same as the number x of OFDM symbols in a sub-frame. For example, the number y of OFDM symbols in a slot may be the same as the number x of OFDM symbols in a sub-frame. The term slot as used herein may indicate a transmission interval. The slot may be a unit used for managing a physical resource in a higher layer. The third radio parameter may include a slot length.

A frame may be the same as a sub-frame or a slot. A frame may be given based on a predetermined number of sub-frames. A frame may be given based on the predetermined number of slots.

A sub-frame, slot, or frame may support a transmission interval shorter than a predetermined transmission interval. The predetermined transmission interval may be any one of a sub-frame length, a slot length, and a frame length. The transmission interval shorter than the predetermined transmission interval may be referred to as mini-slot or short Transmission Time Interval (sTTI).

The transmission interval may be a minimum unit in scheduling for a time resource.

Hereinafter, an example of an initial connection method is described.

The terminal apparatus 1 may perform an operation of detecting a channel transmitted from the base station apparatus 3, upon establishing connection with the base station apparatus 3 (initial connection, preprocessing for communications, preparation for communications, preconnection). The channel transmitted from the base station apparatus 3 is preferably detectable even under a condition where at least one of the communication configurations (such as a bandwidth, cell ID, sub-carrier spacing, common channel configuration, and control channel configuration) of the base station apparatus 3 is unknown to the terminal apparatus 1. For example, the channel transmitted from the base station apparatus 3 may be characterized by being repeatedly transmitted at a predetermined time interval. The channel detected by the terminal apparatus 1 for establishing connection with a base station apparatus is also referred to as a synchronization channel (or Synchronization Signal (SS) and the like).

The synchronization channel may have a function of providing Channel State Information (CSI) about a radio resource for transmitting the synchronization channel, to the terminal apparatus 1. Thus, the synchronization channel may be a reference signal for demodulating information (for example, system information) used for establishing connection with the base station apparatus 3 and the like. For example, the system information may be Master Information Block (MIB) and System Information Block (SIB). The synchronization channel may be information (for example, physical cell ID (Physical Cell ID), virtual cell ID (Virtual Cell ID), ID with which system information is scrambled) used for demodulating system information. Thus, the terminal apparatus 1 may acquire at least one information used for demodulating channel state information and system information by detecting the synchronization channel.

The synchronization channel may be a Primary Synchronization Signal (PSS) and/or a Secondary Synchronization Channel (SSS). The terminal apparatus 1 can acquire channel state information and/or physical cell ID by detecting the synchronization channel. The physical cell ID may be information for identifying the base station apparatus 3, a cell, a beam ID, or a transmission point.

The synchronization channel may be precoded or filtered.

Hereinafter, a physical channel and a signal are described.

The channel transmitted from the base station apparatus 3 may include a synchronization channel, a reference signal, an informing channel, a control channel, and a common channel. The synchronization channel, the reference signal, the informing channel, the control channel, and the common channel may be referred to as a physical channel. The synchronization channel may be transmitted so that the terminal apparatus 1 can synchronize frequency and/or time with a cell. The reference signal may be transmitted for acquiring channel state information (or reception quality information) for demodulating a physical channel other than the reference signal. The informing channel may be a channel including information applied to a plurality of terminal apparatuses 1 connected to the cell. The control channel may be a channel including information applied to the terminal apparatus 1 (or a group of the terminal apparatuses 1). The common channel may be a channel including information applied to the terminal apparatus 1 (or a group of the terminal apparatuses 1).

For example, the synchronization channel may be any one of PSS and SSS. From another point of view, PSS and SSS may be a reference signal for demodulating an informing channel. The synchronization channel may have a function of notifying identification information related to a physical cell ID or to a serving cell such as a virtual cell ID.

For example, the reference signal may be any one of Cell specific Reference signal (CRS), DeModulation Reference signal (DMRS), UE specific - Reference signal (UE-RS), Channel State Information - Reference signal (CSI-RS), and Discovery Reference signal (DRS).

The PSS, the SSS, and the reference signal are also referred to as a physical signal. The physical channel and the physical signal are also referred to as a signal.

For example, the informing channel may be a Physical Broadcast CHannel (PBCH). The informing channel may be a channel including primary information (MIB) for communications between the base station apparatus 3 and the terminal apparatus 1.

For example, the control channel may be any one of a Physical Downlink Control CHannel (PDCCH), an Enhanced Physical Downlink Control CHannel (EPDCCH), and a Physical Uplink Control Channel (PUCCH). The control channel may be a channel including information (such as scheduling information, for example), required for demodulating the common channel. The control channel may include a set of control information. For example, the set of control information may be a Downlink Control Information (DCI). For example, the set of control information may be a downlink grant. For example, the set of control information may include control information (for example, downlink grant) for instructing a radio resource allocated for the common channel, to the terminal apparatus 1. The control channel may be a channel including uplink control information. The uplink control information may include at least HARQ-ACK and/or reception quality information. The HARQ-ACK corresponds to a transport block and indicates an ACKnowledgement (ACK) or a Negative ACKnowledgement (NACK).

For example, the common channel may include a PDSCH (Physical Downlink Shared CHannel), a PUSCH (Physical Uplink Shared CHannel), a PSSCH (Physical Sidelink Shared Channel), and a PSCH (Physical Shared Channel). The common channel may be a channel including a signal of a higher layer. For example, the signal of a higher layer may be information included in an MAC Control Element (MCE). For example, the signal of a higher layer may be information included in Radio Resource Configuration (RRC) signaling. The common channel may be a channel including uplink control information.

An apparatus configuration of the terminal apparatus 1 of the present invention will be described below.

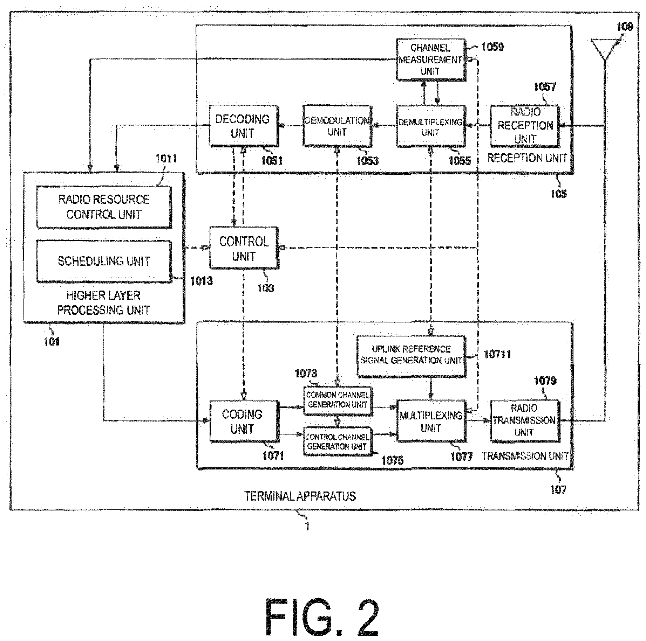

FIG. 2 is a schematic block diagram illustrating a configuration example of the terminal apparatus 1 according to the present embodiment. As is illustrated, the terminal apparatus 1 is configured to include at least one of a higher layer processing unit 101, a control unit 103, a reception unit 105, a transmission unit 107, and a transmit and/or receive antenna 109. The higher layer processing unit 101 is configured to include at least one of a radio resource control unit 1011 and a scheduling unit 1013. The reception unit 105 is configured to include at least one of a decoding unit 1051, a demodulation unit 1053, a demultiplexing unit 1055, a radio reception unit 1057, and a channel measurement unit 1059. The transmission unit 107 is configured to include at least one of a coding unit 1071, a common channel generation unit 1073, a control channel generation unit 1075, a multiplexing unit 1077, a radio transmission unit 1079, and an uplink reference signal generation unit 10711.

The higher layer processing unit 101 outputs the uplink data generated by a user operation or the like, to the transmission unit 107. The higher layer processing unit 101 performs processing of the Medium Access Control (MAC) layer, the Packet Data Convergence Protocol (PDCP) layer, the Radio Link Control (RLC) layer, and the Radio Resource Control (RRC) layer. Furthermore, the higher layer processing unit 101 generates control information for control of the reception unit 105 and the transmission unit 107 based on the downlink control information received by the control channel or the like, and outputs the generated control information to the control unit 103. The processing in the Medium Access Control layer may be partially executed by the control unit 103.

The radio resource control unit 1011 included in the higher layer processing unit 101 manages various pieces of configuration information of the terminal apparatus 1 itself. Furthermore, the radio resource control unit 1011 generates information to be mapped to each uplink channel, and outputs the generated information to the transmission unit 107.

The scheduling unit 1013 of the higher layer processing unit 101 stores downlink control information received via the reception unit 105. The scheduling unit 1013 controls the transmission unit 107 via the control unit 103 to transmit PUSCH in the fourth sub-frame after a sub-frame with which an uplink grant is received, in accordance with the received uplink grant. The scheduling unit 1013 controls the reception unit 105 via the control unit 103 to receive a common channel in a sub-frame with which a downlink grant is received, in accordance with the received downlink grant. The grant may be information instructing a resource allocated to the common channel.

In accordance with the control information originating from the higher layer processing unit 101, the control unit 103 generates a control signal for control of the reception unit 105 and the transmission unit 107. The control unit 103 outputs the generated control signal to the reception unit 105 and the transmission unit 107 to control the reception unit 105 and the transmission unit 107. The control unit 103 can generate a reception acknowledgement response based on decoding information from the decoding unit 1051. The control unit 103 can generate reception quality information based on the decoding information from the decoding unit 1051. The control unit 103 can generate the reception quality information based on channel measurement information from the channel measurement unit 1059. Whether the reception quality information is generated may be given based on a condition X. The control unit 103 can output the uplink control information to the transmission unit 107 or the reception unit 105. The uplink control information may include at least one of the reception acknowledgement response and the reception quality information.

The control unit 103 may have a function of executing part of processing (such as an instruction of retransmission, for example) in the Medium Access Control layer. The control unit 103 may be a function included in the higher layer processing unit 101.

In accordance with the control signal input from the control unit 103, the reception unit 105 demultiplexes, demodulates, and decodes a reception signal received from the base station apparatus 3 through the transmit and/or receive antenna 109, and outputs the resulting information to the higher layer processing unit 101.

The radio reception unit 1057 performs orthogonal demodulation on a downlink signal received through the transmit and/or receive antenna 109 and converts the resulting orthogonally-demodulated analog signal into a digital signal. For example, the radio reception unit 1057 may perform Fast Fourier Transform (FFT) on the digital signal and extract a signal in the frequency domain.

The demultiplexing unit 1055 demultiplexes the extracted signal into a control channel, a common channel, and a reference signal channel. The demultiplexing unit 1055 outputs the reference signal resulting from the demultiplexing, to the channel measurement unit 1059.

The demodulation unit 1053 demodulates the control channel and the common channel in compliance with a modulation scheme such as QPSK, 16 Quadrature Amplitude Modulation (QAM), or 64 QAM, and outputs a result of the demodulation to the decoding unit 1051.

The decoding unit 1051 decodes the downlink data, and outputs the downlink data resulting from the decoding to the higher layer processing unit 101. The channel measurement unit 1059 calculates channel measurement information from the reference signal and outputs the calculated channel measurement information to the demultiplexing unit 1055. The channel measurement unit 1059 may output the calculated channel measurement information to the higher layer processing unit 101. The channel measurement unit 1059 may output the calculated channel measurement information to the control unit 103.

The channel measurement information may be information given based on estimation of a channel (or radio channel, radio space, radio path, channel, radio channel, path, medium, radio medium, and the like). The information given based on the estimation of a channel is used for channel equalization of a reception signal (or channel compensation) in the demultiplexing unit 1055. The channel measurement information may be a path loss estimate, an energy detection value, a reception intensity estimate, and the like. Thus, the channel measurement information may be statistical information (or a short-section average value, a long-section average value, and the like).

The channel measurement information may be given based on measurement (or evaluation, investigation, and the like) of a received reference signal. The channel measurement information may be given based on an average of measurements of a plurality of reference signals (or a plurality of sets of reference signals).

The reception quality information may be information given based on a Bit Error Rate (BER) prediction value, a BLock Error Rate (BLER) prediction value, a Log Likelihood Ratio (LLR), and the like. Thus, the reception quality information may be given based on the decoding information. The reception quality information may be given based on an error rate of a code block (coding block). The error rate of a code block may be given based on the decoding information. The reception quality information may be an index (or an indicator) given based on the decoding information. The code block is described later.

The decoding information is information given based on error correction decoding. The decoding information may indicate whether data has been successfully decoded. The decoding information may be a BER prediction value, a BLER prediction value, and an LLR. The decoding information may be given based on reception intensity of a channel including a transport block (or a data block, transport data, transmission data, a transmission code, a transmission block, payload, information, an information block, coded data, and the like) transmitted from the base station apparatus 3. The BER prediction value is a prediction value for an error rate of each bit in a bit sequence (a binary sequence, digital information, and the like) in the transport block. The BLER prediction value is a prediction value for an error rate of the transport block. The transport block may include one or a plurality of code blocks. The code block may be a unit of data on which error correction coding is to be performed. The transport block may be a unit of data managed by a higher layer. The transport block may be a unit on which error correction coding is to be performed. The transport block may be a unit of data retransmitted by a Hybrid Automatic Repeat reQuest (HARQ). The transport block may be a unit of data in the MAC layer.

The reception quality information may be Channel State Information (CSI). The reception quality information may be an index (or an indicator) given based on channel state information. The channel state information may be given based on the channel measurement information. The channel state information includes a Channel Quality Indicator (CQI), a Precoding Matrix Indicator (PMI), and a Rank Indicator (RI). The channel quality indicator may be a reception intensity of a channel. The precoding matrix indicator may be an indicator indicating the precoding matrix suitable for a channel. The rank indicator may be an indicator indicating a rank suitable for a channel. The rank is an index for spatial multiplexing in spatial multiplex transmission. The reception quality information may be given by quantizing the channel measurement information or the decoding information. For example, when the channel measurement information indicates a reception intensity estimate of a channel, the reception quality information may be given by quantizing the reception intensity estimate. For example, in a case where 4 bits are allocated for the reception quality information, the reception intensity estimate may be classified into 16 states.

The transmission unit 107 generates the uplink reference signal in accordance with the control signal input from the control unit 103, codes and modulates the uplink data and the uplink control information input from the higher layer processing unit 101, multiplexes the common channel, the control channel, and the reference signal, and transmits a result of the multiplexing to the base station apparatus 3 through the transmit and/or receive antenna 109.

The coding unit 1071 codes control information and uplink data input from the higher layer processing unit 101, and outputs the coded bit to the common channel generation unit 1073 and/or the control channel generation unit 1075.

The common channel generation unit 1073 may modulate the coded bit input from the coding unit 1071 to generate a modulation symbol, perform DFT on the modulation symbol to generate a common channel, and output the common channel to the multiplexing unit 1077. The common channel generation unit 1073 may modulate the coded bit input from the coding unit 1071 to generate a common channel, and output the common channel to the multiplexing unit 1077.

The control channel generation unit 1075 generates a control channel based on the coded bit input from the coding unit 1071 and/or SR, and outputs the control channel to the multiplexing unit 1077.

The uplink reference signal generation unit 10711 generates an uplink reference signal, and outputs the generated uplink reference signal to the multiplexing unit 1077.

The multiplexing unit 1077 multiplexes a signal input from the common channel generation unit 1073, a signal input from the control channel generation unit 1075, and/or an uplink reference signal input from the uplink reference signal generation unit 10711 on an uplink resource for each transmission antenna port, in accordance with a control signal input from the control unit 103. The multiplexing unit 1077 outputs the multiplexed signal to the radio transmission unit 1079.

The radio transmission unit 1079 performs Inverse Fast Fourier Transform (IFFT) on a signal resulting from the multiplexing, generates a baseband digital signal, converts the baseband digital signal into an analog signal, generates an in-phase component and an orthogonal component of an intermediate frequency from the analog signal, removes frequency components unnecessary for the intermediate frequency band, converts (up-converts) the signal of the intermediate frequency into a signal of a high frequency, removes unnecessary frequency components, performs power amplification, and outputs a final result to the transmit and/or receive antenna 109 for transmission.

An apparatus configuration of the base station apparatus 3 of the present invention will be described below.

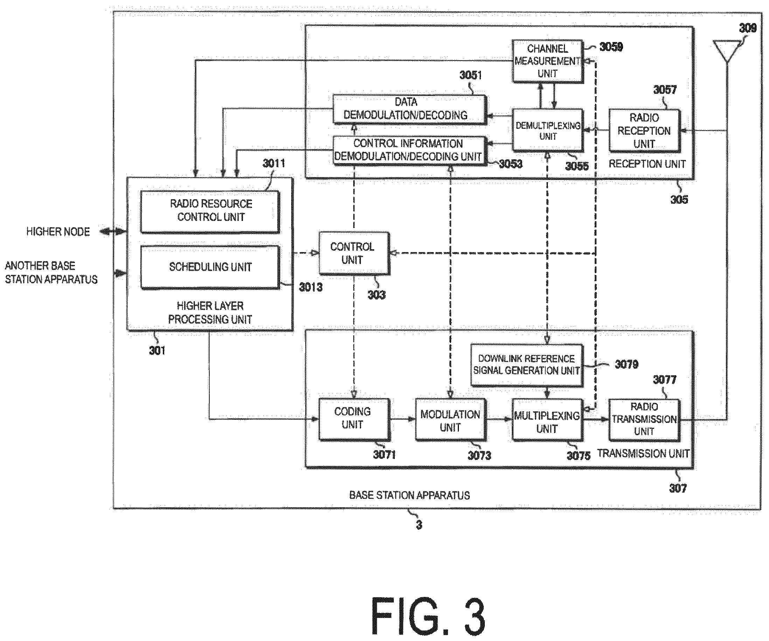

FIG. 3 is a schematic block diagram illustrating a configuration example of the base station apparatus 3 according to the present embodiment. As is illustrated, the base station apparatus 3 is configured to include at least one of a higher layer processing unit 301, a control unit 303, a reception unit 305, a transmission unit 307, and a transmit and/or receive antenna 309. The higher layer processing unit 301 is configured to include at least one of a radio resource control unit 3011 and a scheduling unit 3013. The reception unit 305 is configured to include at least one of a data demodulation/decoding unit 3051, a control information demodulation/decoding unit 3053, a demultiplexing unit 3055, a radio reception unit 3057, and a channel measurement unit 3059. The transmission unit 307 is configured to include at least one of a coding unit 3071, a modulation unit 3073, a multiplexing unit 3075, a radio transmission unit 3077, and a downlink reference signal generation unit 3079.

The higher layer processing unit 301 performs processing of the Medium Access Control (MAC) layer, the Packet Data Convergence Protocol (PDCP) layer, the Radio Link Control (RLC) layer, and the Radio Resource Control (RRC) layer. Furthermore, the higher layer processing unit 301 generates control information for control of the reception unit 305 and the transmission unit 307, and outputs the generated control information to the control unit 303. Part of processing in the Medium Access Control layer may be executed by the control unit 303.

The radio resource control unit 3011 included in the higher layer processing unit 301 generates, or acquires from a higher node, the downlink data mapped to the downlink common channel, RRC signaling, and the MAC Control Element (CE), and outputs a result of the generation or the acquirement to the scheduling unit 3013 or the control unit 303. Furthermore, the radio resource control unit 3011 manages various configuration information for each of the terminal apparatuses 1.

The scheduling unit 3013 of the higher layer processing unit 301 manages a radio resource for a common channel and a control channel allocated to the terminal apparatus 1. In a case where a radio resource for a common channel is allocated to the terminal apparatus 1, the scheduling unit 3013 generates an uplink grant indicating the allocation of the radio resource for the common channel, and transmits the generated uplink grant to the transmission unit 307.

On the basis of the control information originating from the higher layer processing unit 301, the control unit 303 generates a control signal for controlling the reception unit 305 and the transmission unit 307. The control unit 303 outputs the generated control signal to the reception unit 305 and the transmission unit 307 to control the reception unit 305 and the transmission unit 307.

The control unit 303 may have a function of executing part of the processing (such as retransmission instruction for example) in the Medium Access Control layer.

In accordance with the control signal input from the control unit 303, the reception unit 305 demultiplexes, demodulates, and decodes the reception signal received from the terminal apparatus 1 through the transmit and/or receive antenna 309, and outputs information resulting from the decoding to the higher layer processing unit 301.

The radio reception unit 3057 performs orthogonal demodulation on an uplink signal received through the transmit and/or receive antenna 309 and converts the orthogonally-demodulated analog signal into a digital signal. The radio reception unit 3057 performs Fast Fourier Transform (FFT) on the digital signal, extracts a signal in the frequency domain, and outputs the resulting signal to the demultiplexing unit 3055.

The demultiplexing unit 3055 demultiplexes the signal input from the radio reception unit 3057 into the control channel, the common channel, and signals such as the reference signal. The demultiplexing is performed based on radio resource allocation information that is determined in advance by the base station apparatus 3 using the radio resource control unit 3011 and that is included in the uplink grant notified to each of the terminal apparatuses 1. The demultiplexing unit 3055 makes a compensation of channels including the control channel and the common channel from the channel estimate input from the channel measurement unit 3059. Furthermore, the demultiplexing unit 3055 outputs a reference signal channel resulting from the demultiplexing to the channel measurement unit 3059.

The demultiplexing unit 3055 acquires a modulation symbol including uplink data and a modulation symbol including uplink control information from the control channel and the common channel resulting from the demultiplexing. The demultiplexing unit 3055 outputs the modulation symbol including uplink data, acquired from a signal of the common channel, to the data demodulation/decoding unit 3051. The demultiplexing unit 3055 outputs the modulation symbol including the uplink control information, acquired from the control channel or the common channel, to the control information demodulation/decoding unit 3053.

The channel measurement unit 3059 measures the channel estimate, the channel quality, and the like, based on the uplink reference signal input from the demultiplexing unit 3055, and outputs a result of the measurement to the demultiplexing unit 3055 and the higher layer processing unit 301.

The data demodulation/decoding unit 3051 decodes the uplink data from the modulation symbol of the uplink data input from the demultiplexing unit 3055. The data demodulation/decoding unit 3051 outputs the decoded uplink data to the higher layer processing unit 301.

The control information demodulation/decoding unit 3053 decodes HARQ-ACK from the modulation symbol including the uplink control information input from the demultiplexing unit 3055. The control information demodulation/decoding unit 3053 can output the decoded uplink control information to the higher layer processing unit 301 or the control unit 303.

The transmission unit 307 generates the downlink reference signal in accordance with the control signal input from the control unit 303, codes and modulates the downlink control information and the downlink data input from the higher layer processing unit 301, multiplexes the control channel, the common channel, and the reference signal, and transmits a result of the multiplexing to the terminal apparatus 1 through the transmit and/or receive antenna 309.

The coding unit 3071 performs coding on the downlink control information and the downlink data input from the higher layer processing unit 301. The modulation unit 3073 modulates the coded bits input from the coding unit 3071, in compliance with the modulation scheme such as BPSK, QPSK, 16QAM, or 64QAM. The modulation unit 3073 may precode the modulation symbol. The precoding may include a transmission precode. The precoding may include multiplication (application) of a precoder.

The downlink reference signal generation unit 3079 generates a downlink reference signal. The multiplexing unit 3075 multiplexes the modulation symbol of each channel and the downlink reference signal, and generates a transmission symbol.

The multiplexing unit 3075 may precode a transmission symbol. The precoding applied to the transmission symbol by the multiplexing unit 3075 may be applied to the downlink reference signal and/or modulation symbol. The precoding applied to the downlink reference signal may be the same as or different from that applied to the modulation symbol.

The radio transmission unit 3077 performs Inverse Fast Fourier Transform (IFFT) on the multiplexed transmission symbol and the like and generates a time symbol. The radio transmission unit 3077 performs the modulation in compliance with the OFDM scheme on the time symbol to generate a digital signal in a baseband, converts the digital signal in the baseband into an analog signal, generates an in-phase component and an orthogonal component of an intermediate frequency from the analog signal, removes frequency components unnecessary for the intermediate frequency band, converts (up-converts) the signal of the intermediate frequency into a signal of a high frequency, removes unnecessary frequency components, and generates carrier wave signals (such as Carrier signals, Carriers, and RF signals). The radio transmission unit 3077 amplifies the power of the carrier wave signal and outputs the resultant signal to the transmit and/or receive antenna 309 to output the signal.

The control unit 103 is described below in an example where an uplink communication is performed. The function of the control unit 103 may be similarly provided to the higher layer processing unit 101, the higher layer processing unit 301, and the control unit 303.

The control unit 103 may determine whether to generate the reception quality information at least based on the reception acknowledgement response. The control unit 103 can generate the reception quality information at least based on the channel measurement information. The control unit 103 can generate the reception quality information at least based on the decoding information.

The control unit 103 may not generate the reception quality information in a case where the reception acknowledgement response indicates ACKnowledgement (ACK). The control unit 103 may generate the reception quality information in a case where the reception acknowledgement response indicates Negative ACKnowledgement (NACK). The control unit 103 may generate the reception quality information in a case where the reception acknowledgement response indicates ACKnowledgement (ACK). The control unit 103 may not generate the reception quality information in a case where the reception acknowledgement response indicates Negative ACKnowledgement (NACK). The control unit 103 may generate the first reception quality information in a case where the reception acknowledgement response indicates ACK. The control unit 103 may generate the second reception quality information in a case where the reception acknowledgement response indicates NACK. The first reception quality information and the second reception quality information may be different from each other in the number of bits. For example, the number of bits of the second reception quality information may be larger than the number of bits of the first reception quality information. For example, a range corresponding to a value of the first reception quality information may be different from a range corresponding to a value of the second reception quality information. For example, the range corresponding to the second reception quality information may be larger than the range corresponding to the first reception quality information. The first reception quality information and the second reception quality information may be different from each other in granularity (or quantization granularity). For example, the granularity of the second reception quality information may be finer than the granularity of the first reception quality information.

In a case where the reception quality information is not generated, the control unit 103 may output uplink control information at least including the reception acknowledgement response to the transmission unit 105. In a case where the reception quality information is generated, the control unit 103 may output uplink control information at least including the reception quality information to the transmission unit 105. In a case where the reception quality information is generated, the control unit 103 may output uplink control information at least including the reception quality information and reception acknowledgement response to the transmission unit 105. The uplink control information including reception quality information and reception acknowledgement response may be given with an information bit for the reception quality information joined with an information bit for the reception acknowledgement response. The uplink control information including reception quality information and reception acknowledgement response may be given with a bit sequence indicating a code point corresponding to the reception quality information joined with a bit sequence indicating a code point corresponding to the reception acknowledgement response. The uplink control information including the reception quality information and the reception acknowledgement response may be given through joint coding based on bit sequences of code points corresponding to the reception quality information and the reception acknowledgement response. An example of the joint coding is described later.

The control unit 103 may determine a code point (mapping) corresponding to the uplink control information. The code point may be each state of a binary bit sequence, for example. The control unit 103 may determine uplink control information allocated to a code point.

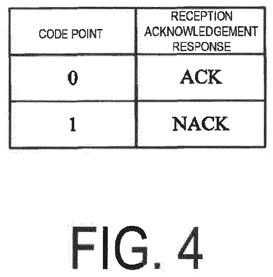

FIG. 4 illustrates an example of the reception acknowledgement response allocated to code points. In an example illustrated in FIG. 4, 1 bit is allocated for the reception acknowledgement response and two code points are given. Code point 0 indicates ACK, and code point 1 indicates NACK. Thus, code point 0 is allocated for ACK and code point 1 is allocated for NACK.

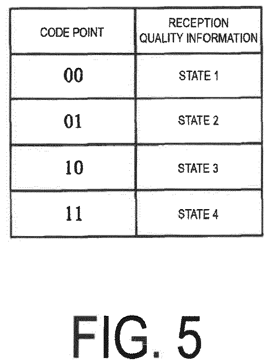

FIG. 5 illustrates an example of reception quality information allocated to code points. In an example illustrated in FIG. 5, 2 bits are allocated for the reception quality information, and four code points are given. Code point 00 indicates state 1, code point 01 indicates state 2, code point 10 indicates state 3, and code point 11 indicates state 4. Each of state 1 to state 4 is given based on reception quality information. Specifically, code point 00 is allocated for state 1, code point 01 is allocated for state 2, code point 10 is allocated for state 3, and code point 11 is allocated for state 4.

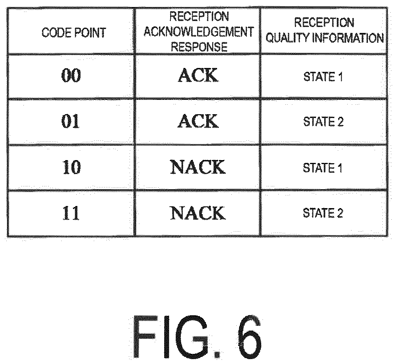

FIG. 6 illustrates an example of uplink control information allocated to code points through first Joint coding. In an example illustrated in FIG. 6, 2 bits are allocated for the uplink control information, and four code points are given. The joint coding may associate code points with a plurality of pieces of control information as illustrated in FIG. 6. In FIG. 6, code point 00 indicates that the reception acknowledgement response is ACK, and that the reception quality information is state 1. Code point 01 indicates that the reception acknowledgement response is ACK, and that the reception quality information is state 2. Code point 10 indicates that the reception acknowledgement response is NACK, and that the reception quality information is state 1. Code point 11 indicates that the reception acknowledgement response is NACK, and that the reception quality information is state 2. Thus, code point 00 is allocated for ACK, and for state 1. Code point 01 is allocated for ACK, and for state 2. Code point 10 is allocated for NACK, and for state 1. Code point 11 is allocated for NACK, and for state 2.

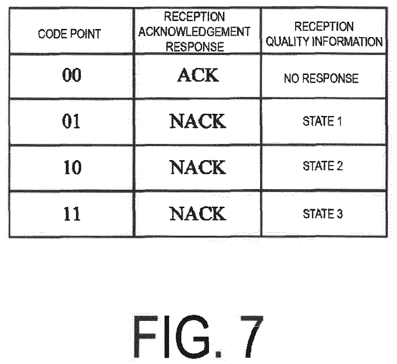

FIG. 7 illustrates an example of uplink control information allocated to code points through second joint coding. In an example illustrated in FIG. 7, 2 bits are allocated for uplink control information, and four code points are given. In an example illustrated in FIG. 7, only one of the four code points is allocated for ACK, and the other three code points are allocated for NACK. In FIG. 7, code point 00 indicates ACK but corresponds to no reception state information. This is because code point 00 is the only code point indicating that the reception acknowledgement response is ACK. In FIG. 7, code point 01 indicates that the reception acknowledgement response is NACK, and the reception quality information is state 1. Code point 10 indicates that the reception acknowledgement response is NACK, and the reception quality information is state 2. Code point 11 indicates that the reception acknowledgement response is NACK, and the reception quality information is state 3. The three code points indicate that the reception acknowledgement response is NACK, and thus three reception quality states can be indicated with the reception acknowledgement response being NACK. Thus, code point 00 is allocated for ACK. Code point 01 is allocated for NACK, and for state 1. Code point 10 is allocated for NACK, and for state 2. Code point 11 is allocated for NACK, and for state 3.

The second joint coding results in the number of code points indicating that the reception acknowledgement response is NACK being larger than the number of code points indicating that the reception acknowledgement response is ACK, and thus is expected to achieve the effect of reducing a rate of error from NACK to ACK. Specifically, in a case where uplink control information given by the second joint coding indicates NACK, the base station apparatus 3, which receives the uplink control information, is expected to be less likely to erroneously determine that the reception acknowledgement response indicates ACK based on the uplink control information. Generally, it is preferable that the rate of error from ACK to NACK is lower than the rate of error from NACK to ACK.

The control unit 103 may determine the uplink control information allocated to code points in such a manner that a larger number of code points are allocated for ACK than the code points allocated for NACK. The reception quality information may not be allocated to the code point allocated for ACK. The reception quality information may be allocated to the code point allocated for NACK.

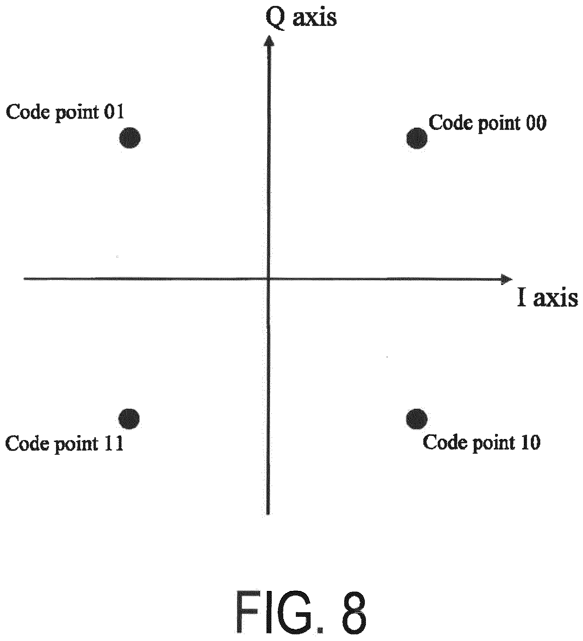

The uplink control information generated by the control unit 103 may be coded by the transmission unit 107. The uplink control information generated by the control unit 103 may not be coded by the transmission unit 107. The uplink control information generated by the control unit 103 may be modulated by the transmission unit 107 with QPSK, 16QAM, 64QAM, or the like. FIG. 8 is a diagram illustrating relationship between uplink control information and modulation. The I axis is a real axis and the Q axis is an imaginary axis. In an example illustrated in FIG. 8, QPSK modulation is performed on the uplink control information. One code point corresponds to each QPSK modulation point. In an example illustrated in FIG. 8, a set of code points 00 and 11 and a set of code points 01 and 10 involve the longest distance between modulation points. Such a large distance between modulation points indicates a small possibility of error, and thus the uplink control information can be designed based on a distance between the modulation points. For example, as illustrated in FIG. 7, the state 3 indicated by the reception quality information at code point 11 in the uplink control information given based on the second joint coding may indicate a largest degradation of the reception quality from state 1 to state 3.

For example, in a case where the uplink control information allocated to code points is given based on the first joint coding, the uplink control information includes reception quality information regardless of information (ACK or NACK) indicated by the reception acknowledgement response. In a case where the uplink control information allocated to code points is given based on the second joint coding, the uplink control information includes reception quality information if the reception acknowledgement response indicates NACK. In a case where the uplink control information allocated to code points is given based on the second joint coding, the uplink control information does not include reception quality information if the reception acknowledgement response indicates ACK.

Operation procedure of the terminal apparatus 1 and the base station apparatus 3 will be described below. In the following, the operation performed by the units included in the terminal apparatus 1 (the higher layer processing unit 101, the control unit 103, the reception unit 105, the transmission unit 107, and the transmit and/or receive antenna 109) are illustrated as the operation performed by the terminal apparatus 1. The operation performed by the units included in the base station apparatus 3 (the higher layer processing unit 301, the control unit 303, the reception unit 305, the transmission unit 307, and the transmit and/or receive antenna 309) are illustrated as the operation performed by the base station apparatus 3.

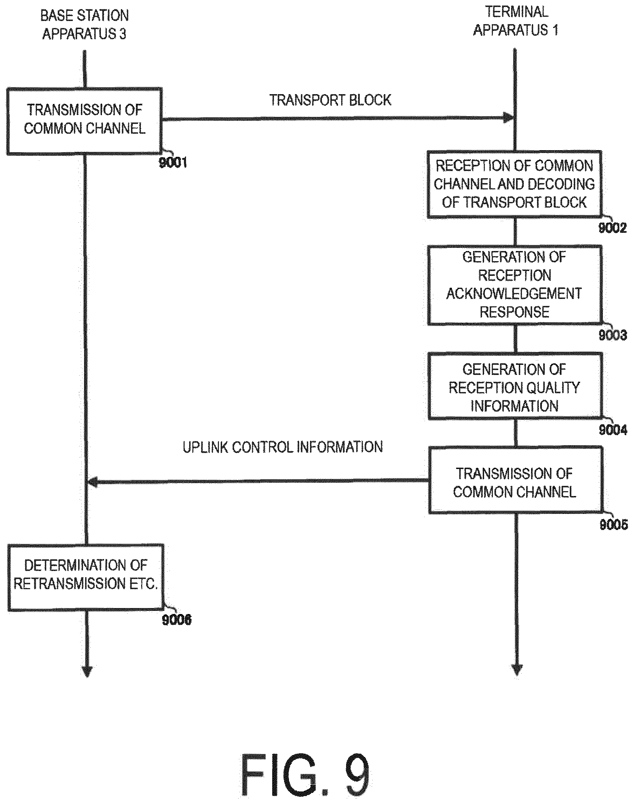

FIG. 9 is a sequence chart illustrating an example of operation procedure of the terminal apparatus 1 and the base station apparatus 3 according to one aspect of the present invention. In step 9001, the base station apparatus 3 transmits a common channel including a transport block to the terminal apparatus 1. This step 9001 may include a step of transmitting, from the base station apparatus 3 to the terminal apparatus 1, a control channel including control information instructing a radio resource, allocated for the common channel, to the terminal apparatus 1. Next, in step 9002, the terminal apparatus 1 receives the common channel, and decodes the transport block. In this step 9002, the terminal apparatus 1 may receive the control channel and decode the control information. Thus, in step 9002, the terminal apparatus 1 may determine a radio resource allocated to the common channel based on the control information. Next, in step 9003, the terminal apparatus 1 generates a reception acknowledgement response based on the decoding of the transport block. For example, the reception acknowledgement response may be ACK in a case where the transport block is successfully decoded (for example, with no error detected in a check using a bit sequence added for error detection (such as a cyclic redundancy check sequence and the like)). The reception acknowledgement response may be ACK in a case where the transport block fails to be decoded (for example, with an error detected in a check using a bit sequence added for error detection).

Next, in step 9004, the terminal apparatus 1 determines whether to generate the reception quality information based on the reception acknowledgement response. In step 9004, the terminal apparatus 1 may generate the reception quality information based on a fact that the reception acknowledgement response is NACK. In step 9004, the reception quality information may be given based on channel measurement information given based on measurement of a reference signal included in the common channel including the transport block used for generating the reception acknowledgement response (or used for decoding the common channel). The reception quality information may be given based on channel measurement information given based on a reference signal included in the control channel instructing the common channel including the transport block used for generating the reception acknowledgement response. The reception quality information may be given based on the channel measurement information given based on the reference signals included in the common channel and the control channel. The reception quality information may be given based on decoding information generated in decoding of the transport block used for generating the reception acknowledgement response. This step 9004 may include a step of determining by the terminal apparatus 1, the uplink control information allocated to a code point.

Next, in step 9005 a channel (for example, a common channel, a control channel, or the like) including the uplink control information including the reception acknowledgement response and/or the reception quality information is transmitted to the base station apparatus 3. Next, in step 9006, the base station apparatus 3 determines whether to retransmit the transport block based on the uplink control information included in the channel received. In step 9006, the base station apparatus 3 may schedule the retransmission of the transport block based on the uplink control information included in the channel received. For example, the transport block may not be retransmitted in a case where the reception acknowledgement response indicates ACK. For example, the transport block may be retransmitted in a case where the reception acknowledgement response indicates NACK. This procedure enables the base station apparatus 3 to favorably select a radio resource allocated for retransmission of the transport block, a parameter used for the coding (a coding ratio and modulation scheme), and the like, in a case where the reception quality information is successfully detected in step 9006, whereby frequency use efficiency is expected to improve.

In step 9006, the base station apparatus 3 may determine whether to detect the reception quality information, based on detection of the reception acknowledgement response. For example, in a case where the uplink control information is given by joining the bit sequence for the reception acknowledgement response and a bit sequence for the reception quality information, whether the uplink control information includes the reception quality information is preferably determined based on detection of a value (ACK or NACK) indicated by the reception acknowledgement response.

In an exemplary procedure in step 9001 to step 9006, in a case where the base station apparatus 3 retransmits a transport block, the terminal apparatus 1 preferably provides the base station apparatus 3 with information used for determining a radio resource related to the retransmission of the transport block and a parameter used for the coding. Thus, with whether to generate the reception quality information given based on the reception acknowledgement response in step 9004, the provision of the information for determining a radio resource related to the retransmission and a parameter used for the coding to the base station apparatus 3. For example, in step 9005, the terminal apparatus 1 may use the uplink channel to transmit the uplink control information including the reception quality information. The uplink control information including the reception quality information is preferably transmitted as appropriate based on a predetermined condition, considering the fact that the resource for the uplink channel is limited and an error rate of the reception acknowledgement response received by the base station apparatus 3 is preferably low. For example, in an exemplary procedure in step 9001 to step 9006, in a case where the transport block is retransmitted, the terminal apparatus 1 preferably provides the base station apparatus 3 with the reception quality information. This is particularly effective in a case where the number of blocks transmitted from the base station apparatus 3 to the terminal apparatus 1 is small (small data communications and the like). Thus, in step 9004, whether the reception quality information is generated is preferably given based on the reception acknowledgement response. In a case where multiple transport blocks are transmitted (such as in large capacity data communications in particular), even in a case where the base station apparatus 3 receives the reception acknowledgement response indicating ACK in step 9006, the terminal apparatus 1 provides the base station apparatus 3 with reception quality information for determining a radio resource related to the next transmission of the transport block and a parameter used for the next coding. In such a case, whether the reception quality information is generated may not be based on the reception acknowledgement response in step 9004.

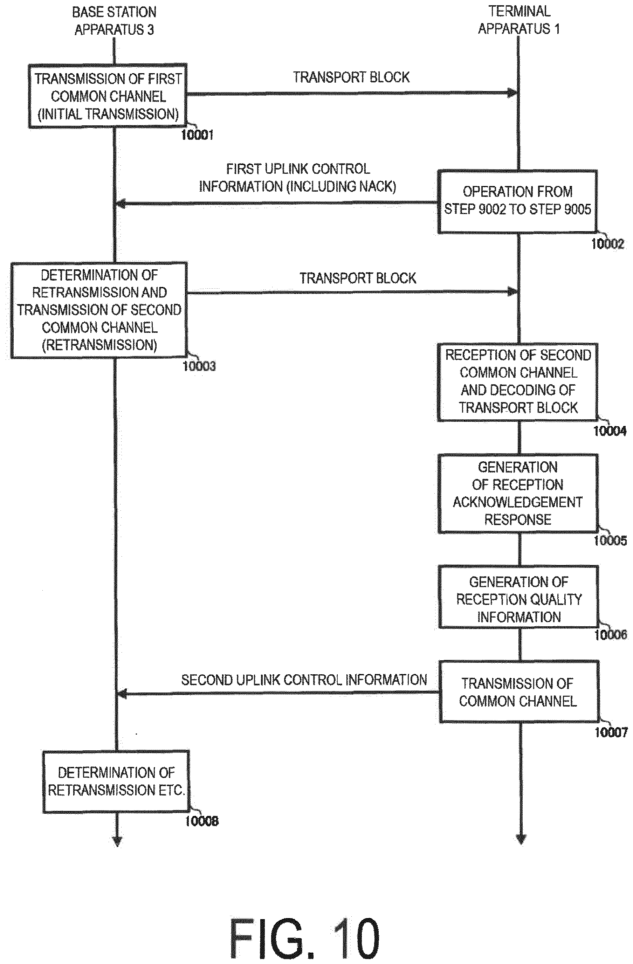

FIG. 10 is a sequence chart illustrating an example of procedure of the terminal apparatus 1 and the base station apparatus 3 according to one aspect of the present invention. An operation performed by the base station apparatus 3 in step 10001 is the same as that in step 9001. The transmission of the transport block in step 10001 is also referred to as new transmission or initial transmission. In the initial transmission, the common channel including the transport block is also referred to as a first common channel. In the initial transmission, the control channel including control information for instructing the common channel is also referred to as a first control channel. Next, the terminal apparatus 1 executes step 10002. An operation in step 10002 is the same as that in step 9002 to step 9005. The reception acknowledgement response generated in step 10002 is also referred to as a first reception acknowledgement response. The reception quality information generated in step 10002 is also referred to as first reception quality information. The uplink control information included in a common channel transmitted by the terminal apparatus 1 in step 10002 is also referred to as first uplink control information.

Next, in step 10003, the base station apparatus 3 may determine whether to retransmit the transport block, based on the uplink control information included in the channel received in step 10002. It is assumed herein that the base station apparatus 3 has determined to retransmit the transport block in step 10003. Specifically, in step 10003, the base station apparatus 3 transmits a second common channel including the transport block. The base station apparatus 3 may transmit a second control channel including control information instructing the second common channel. Next, in step 10004, the terminal apparatus 1 receives the second common channel, and decodes the transport block. The transport block may be decoded based on the first common channel, and/or the second common channel. In step 10004, the terminal apparatus 1 may receive the second control channel.

Next, in step 10005, second reception acknowledgement response is generated based on the decoding of the transport block. Next, in step 10006, second reception quality information is generated based on the second reception acknowledgement response. In step 10004, the second reception quality information may be given based on first channel measurement information given based on measurement of a reference signal included in the first common channel including the transport block used for generating the first reception acknowledgement response (or used for demodulating the first common channel). The second reception quality information may be given based on second channel measurement information given based on measurement of a reference signal included in the second common channel including the transport block used for generating the second reception acknowledgement response (or used for demodulating the second common channel). The second reception quality information may be given based on the first channel measurement information and the second channel measurement information. For example, the second reception quality information may be given based on an average value of the first channel measurement information and the second channel measurement information. The second reception quality information may be given based on a weighted average value (for example, obtained by filtering based on a coefficient such as a forgetting coefficient and the like) of the first channel measurement information and the second channel measurement information. The second reception quality information may be information designating one of the first common channel and the second common channel with a higher reception quality. Next, in step 10007, the terminal apparatus 1 transmits, to the base station apparatus 3, a channel (for example, the common channel, the control channel, or the like) including second uplink control information including the second reception acknowledgement response and/or the second reception quality information. Next, in step 10008, the base station apparatus 3 determines whether to retransmit the transport block, based on the second uplink control information included in the received channel. In step 10008, the base station apparatus 3 may schedule the retransmission of the transport block, based on the second uplink control information.

Thus, when one transport block is retransmitted, the terminal apparatus 1 may receive a plurality of common channels including the transport block. In a case where the plurality of common channels are received, the reception quality information may be given based on the latest common channel received in the plurality of common channels. The latest common channel received in the plurality of common channels including the same transport block is the last common channel received in a plurality of common channels including the same transport block.

In a case where the plurality of common channels are received, the reception quality information may be given based on any one of the plurality of common channels. In a case where the plurality of common channels are received, the reception quality information may be given based on part (a set of common channels) of the plurality of common channels. In a case where the plurality of common channels are received, the reception quality information may be given based on all of the plurality of common channels.

In step 10003 and step 10008, the base station apparatus 3 may determine whether to detect the reception quality information based on the detection of the reception acknowledgement response.

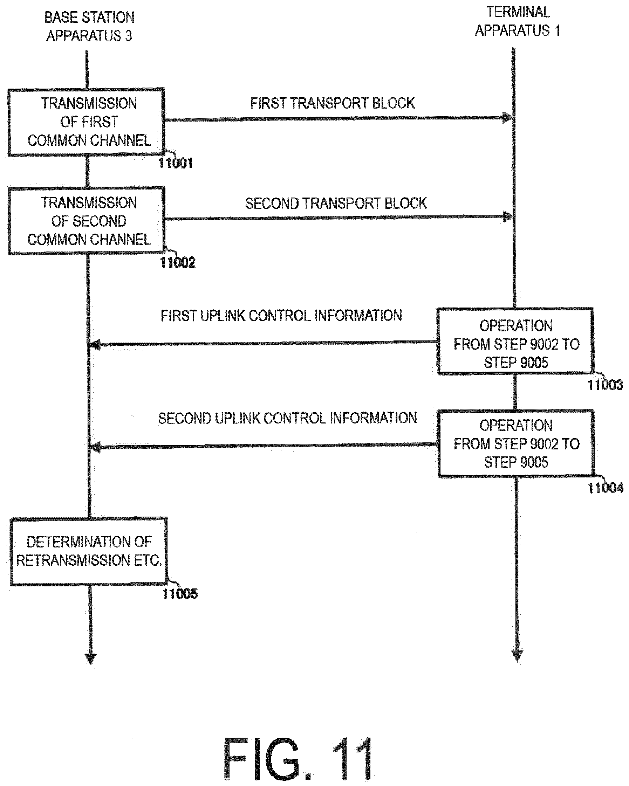

FIG. 11 is a sequence chart illustrating an example of a procedure performed by the terminal apparatus 1 and the base station apparatus 3 according to one aspect of the present invention. In step 11001, the base station apparatus 3 transmits the first common channel including the first transport block. This transmission of the first common channel may be initial transmission or may be retransmission. Next, in step 11002, the base station apparatus 3 transmits the second common channel including the second transport block different from the first transport block. This transmission of the second common channel may be initial transmission or may be retransmission. The first common channel and the second common channel may be transmitted at different time points (or different slots, sub-frames, frames, or the like). Alternatively, the first common channel and the second common channel may be transmitted at the same time point (or the same slot, sub-frame, frame, or the like).

Next, the terminal apparatus 1 executes step 11003. An operation in step 11003 is the same as that in step 9002 to step 9005. The reception acknowledgement response generated in step 11002 is also referred to as a first reception acknowledgement response. The reception quality information generated in step 11002 is also referred to as first reception quality information. The uplink control information included in a common channel transmitted by the terminal apparatus 1 in step 11002 is also referred to as first uplink control information.

Next, the terminal apparatus 1 executes step 11004. An operation in step 11004 is the same as that in step 9002 to step 9005. The reception acknowledgement response generated in step 11004 is also referred to as a second reception acknowledgement response. The reception quality information generated in step 11004 is also referred to as second reception quality information. The uplink control information included in a common channel transmitted by the terminal apparatus 1 in step 11004 is also referred to as second uplink control information.

In step 11004, the second reception quality information is given at least based on the second reference signal included in the second common channel including the second transport block. The second reception quality information is not based on the first reference signal included in the first common channel including the first transport block. Thus, the first reference signal and the second reference signal need not to be averaged for calculating the second reception quality information. The first transport block and the second transport block could be provided from different services. Thus, it may not be important to average the first reference signal and the second reference signal just because the signals are close to each other in the transmission time point (or slot, sub -frame, frame, or the like). Still, the second reception quality information may be given based on the averaging of the first reference signal and the second reference signal, if the first transport block and the second transport block are associated with each other due to a predetermined reason. Examples of the predetermined reason include a case where the bearer is the same between the first transport block and the second transport block, a case where a common format or the like is used for the control information (for example, downlink grant) instructing the reception of the first transport block and the second transport block, and a case where the first transport block the second transport block are in initial transmission-retransmission relationship.

Next, in step 11005, the base station apparatus 3 determines whether to retransmit the first transport block based on the first uplink control information, and determines whether to retransmit the second transport block based on the second uplink control information. In step 11005, the base station apparatus 3 may schedule the retransmission of the first transport block based on the first uplink control information, and schedule the retransmission of the second transport block based on the second uplink control information.

In step 11005, the base station apparatus 3 may determine whether to detect the reception quality information based on the detection of the reception acknowledgement response.

Whether the reception quality information is transmitted may be determined at least based on the reception acknowledgement response. Whether the reception quality information is included in the uplink control information may be given at least based on the reception acknowledgement response. Whether the reception quality information is generated may be determined at least based on the reception acknowledgement response. The uplink control information allocated to code points may be given at least based on the reception acknowledgement response.

Whether the reception quality information is transmitted may be determined based on a condition X. Whether the reception quality information is included in the uplink control information may be given at least based on the condition X. Whether the reception quality information is generated may be determined based on the condition X. The uplink control information allocated to code points may be given based on the condition X. The condition X may include at least part of condition X1 to condition X11. The condition X may include a condition other than the condition X1 to the condition X11.

The condition X1 is whether Reference SCS, assumed for the common channel including the transport block used for generating the reception acknowledgement response, is of a predetermined value x1. This predetermined value x1 may be 15 kHz or 30 kHz, for example. The predetermined value x1 may represent a range of Reference SCS. For example, the predetermined value x1 may include a value from 15 kHz to 120 kHz.

The condition X2 is whether the length of a sub-frame, configured for the common channel including the transport block that the reception acknowledgement response corresponds, is a predetermined length x2. This predetermined length x2 may be 1 ms or 0.5 ms, for example. The predetermined value x2 may represent a range of the length of the sub-frame. For example, the predetermined value x2 may include a value from 0.1 ms to 2 ms.

The condition X3 is whether the length of a transmission interval of the common channel including the transport block that the reception acknowledgement response corresponds is a predetermined length x3. The predetermined length x3 may be 1 ms or 0.5 ms, for example. The predetermined value x3 may represent a range of the length of the sub-frame. For example, the predetermined value x3 may include a value from 0.1 ms to 2 ms. The transmission interval may be the length of a slot. Alternatively, the transmission interval may be the length of a mini-slot.

The condition X4 is whether Actual SCS applied to the common channel including the transport block used for generating the reception acknowledgement response is of a predetermined value x4. This predetermined value x4 may be 15 kHz or 30 kHz, for example. The predetermined value x4 may represent a range of Actual SCS. For example, the predetermined value x1 may include a value from 15 kHz to 120 kHz.

The condition X5 is whether a transmission scheme applied to the common channel including the transport block used for generating the reception acknowledgement response is a predetermined scheme x5. This predetermined scheme x5 may be OFDM or DFT-S-OFDM, for example.

The condition X6 is whether a scheme for error correction coding applied to the transport block used for generating the reception acknowledgement response is a predetermined scheme x6. This predetermined scheme x6 may be a turbo code, an LDPC code, a convolution code, or a Tail biting Convolutional code (TBCC), for example.

The condition X7 is whether a coding ratio of an error correction code applied to the transport block used for generating the reception acknowledgement response is a predetermined value x7. This predetermined value x7 may be 1/3 or 1/5, for example. The predetermined value x7 may represent a range of the coding ratio. For example, the predetermined value x7 may include a value from 1/10 to 1/2.

The condition X8 is whether a mapping method to the common channel of the transport block used for generating the reception acknowledgement response is a predetermined method x8. This x8 may be a method for mapping based on a time axis (Time-first mapping), or a method for mapping based on frequency (Frequency first mapping), for example.

The condition X9 is whether a processing time, configured between the common channel including the transport block used for generating the reception acknowledgement response and a channel including the reception acknowledgement response, is of a predetermined length x9. This processing time may be an interval between transmission of the common channel and transmission of the channel. This condition x9 may be 1 ms or 3 ms, for example. The condition x9 may be indicated by a constant multiplication of the length of a sub-frame, a constant multiplication of the length of a slot, or a constant multiplication of the length of a symbol. The predetermined length x9 may represent a range of the processing time. For example, the predetermined length x9 may be from 0.2 ms to 2 ms.

The condition X10 may be whether information included in a signal (for example, RRC signaling and the like) of a higher layer transmitted from the base station apparatus 3, or in the control channel is set to trigger transmission of the reception quality information.

The condition X11 may be whether the reception acknowledgement response is of a predetermined value XI1. For example, the predetermined value X11 may be ACK or NACK.

Hereinafter, various aspects of the terminal apparatus 1 and the base station apparatus 3 according to the present embodiment will be described.
(1) To accomplish the object described above, aspects of the present invention are contrived to provide the following measures. Specifically, a first aspect of the present invention provides a terminal apparatus 1 including a reception unit 105 configured to receive a common channel, a decoding unit 1051 configured to generate an acknowledgement response based on whether a transport block in the common channel has been successfully decoded, and a transmission unit 107 configured to transmit uplink control information including the acknowledgement response. Whether the uplink control information includes reception quality information is given at least based on the acknowledgement response, and the reception quality information is given based on a signal received by the reception unit 105.
(2) In the first aspect of the present invention, in a case where the acknowledgement response indicates ACK, the reception quality information is not included in the uplink control information, and in a case where the acknowledgement response indicates NACK, the reception quality information is included in the uplink control information.
(3) In the first aspect of the present invention, number of code points allocated with the uplink control information indicating the ACK is smaller than number of code points allocated with the uplink control information indicating the NACK.
(4) In the first aspect of the present invention, the common channel is a first common channel, the acknowledgement response is a first acknowledgement response, the reception unit 105 receives a second common channel different from the first common channel, the decoding unit 1051 generates second acknowledgement response based on whether the transport block included in the second common channel has been successfully decoded, and the reception quality information is generated based on a reference signal related to at least the second common channel and/or the second common channel.
(5) A second aspect of the present invention provides a base station apparatus 3 including a transmission unit 307 configured to transmit a common channel including a transport block to a terminal apparatus, and a reception unit 305 configured to receive uplink control information including an acknowledgement response corresponding to the transport block from the terminal apparatus 1. Whether the uplink control information includes reception quality information is given based on the acknowledgement response, and the reception quality information is given based on a signal received by the terminal apparatus 1.
(6) In the second aspect of the present invention, in a case where the acknowledgement response is detected as ACK, the reception quality information is not included in the uplink control information, and in a case where the acknowledgement response indicates NACK, the reception quality information is included in the uplink control information.
(7) In the second aspect of the present invention, the number of code points allocated with the uplink control information indicating the ACK is smaller than the number of code points allocated with the uplink control information indicating the NACK.
(8) In the second aspect of the present invention, the common channel is a first common channel, the acknowledgement response is a first acknowledgement response, the transmission unit 307 transmits a second common channel different from the first common channel, and the reception quality information is generated based on a reference signal related to at least the second common channel received by the terminal apparatus 1 and/or the second common channel.

The acknowledgement response may be reception acknowledgement response. The signal may be any of a physical channel, a physical signal, a common channel, a control channel, and a reference signal.

Each of a program running on a base station apparatus 3 and a terminal apparatus 1 according to one aspect of the present invention may be a program that controls a Central Processing Unit (CPU) and the like, such that the program causes a computer to operate in such a manner as to realize the functions of the above-described embodiment according to one aspect of the present invention. The information handled in these devices is temporarily stored in a Random Access Memory (RAM) while being processed. Thereafter, the information is stored in various types of Read Only Memory (ROM) such as a flash ROM and a Hard Disk Drive (HDD), and when necessary, is read by the CPU to be modified or rewritten.

Note that the terminal apparatus 1 and the base station apparatus 3 according to the above-described embodiment may be partially achieved by a computer. In that case, this configuration may be realized by recording a program for realizing such control functions on a computer-readable recording medium and causing a computer system to read the program recorded on the recording medium for execution.

Note that it is assumed that the "computer system" mentioned here refers to a computer system built into the terminal apparatus 1 or the base station apparatus 3, and the computer system includes an OS and hardware components such as a peripheral apparatus. Furthermore, the "computer-readable recording medium" refers to a portable medium such as a flexible disk, a magneto-optical disk, a ROM, a CD-ROM, and the like, and a storage apparatus such as a hard disk built into the computer system.

Moreover, the "computer-readable recording medium" may include a medium that dynamically retains a program for a short period of time, such as a communication line that is used to transmit the program over a network such as the Internet or over a communication line such as a telephone line, and may also include a medium that retains a program for a fixed period of time, such as a volatile memory within the computer system for functioning as a server or a client in such a case. Furthermore, the program may be configured to realize some of the functions described above, and also may be configured to be capable of realizing the functions described above in combination with a program already recorded in the computer system.

Furthermore, the base station apparatus 3 according to the above-described embodiment may be achieved as an aggregation (an apparatus group) constituted of multiple apparatuses. Each of the apparatuses configuring such an apparatus group may include some or all portions of each function or each functional block of the base station apparatus 3 according to the above-described embodiment. The apparatus group may include each general function or each functional block of the base station apparatus 3. Furthermore, the terminal apparatus 1 according to the above-described embodiment can also communicate with the base station apparatus as the aggregation.

Furthermore, the base station apparatus 3 according to the above-described embodiment may serve as an Evolved Universal Terrestrial Radio Access Network (EUTRAN). Furthermore, the base station apparatus 3 according to the above-described embodiment may have some or all portions of the functions of a node higher than an eNodeB.

Furthermore, some or all portions of each of the terminal apparatus 1 and the base station apparatus 3 according to the above-described embodiment may be typically achieved as an LSI which is an integrated circuit or may be achieved as a chip set. The functional blocks of each of the terminal apparatus 1 and the base station apparatus 3 may be individually achieved as a chip, or some or all of the functional blocks may be integrated into a chip. Furthermore, a circuit integration technique is not limited to the LSI, and may be realized with a dedicated circuit or a general-purpose processor. Furthermore, in a case where with advances in semiconductor technology, a circuit integration technology with which an LSI is replaced appears, it is also possible to use an integrated circuit based on the technology.

Furthermore, according to the above-described embodiment, the terminal apparatus has been described as an example of a communication apparatus, but the present invention is not limited to such a terminal apparatus, and is applicable to a terminal apparatus or a communication apparatus of a fixed-type or a stationary-type electronic apparatus installed indoors or outdoors, for example, such as an Audio-Video (AV) apparatus, a kitchen apparatus, a cleaning or washing machine, an air-conditioning apparatus, office equipment, a vending machine, and other household apparatuses.

The embodiments of the present invention have been described in detail above referring to the drawings, but the specific configuration is not limited to the embodiments and includes, for example, an amendment to a design that falls within the scope that does not depart from the gist of the present invention. Furthermore, various modifications are possible within the scope of one aspect of the present invention defined by claims, and embodiments that are made by suitably combining technical means disclosed according to the different embodiments are also included in the technical scope of the present invention. Furthermore, a configuration in which constituent elements, described in the respective embodiments and having mutually the same effects, are substituted for one another is also included in the technical scope of the present invention.

### Industrial Applicability

One aspect of the present invention can be utilized in a communication system, a communication device (a mobile phone device, a base station apparatus, a wireless LAN device, or a sensor device), an integrated circuit (for example, a communication chip), a program or the like.

### Reference Signs List

1 (1A, 1B, 1C) Terminal apparatus
3 Base station apparatus
101, 301 Higher layer processing unit
103, 303 Control unit
105, 305 Reception unit
107, 307 Transmission unit
109, 309 Transmit and/or receive antenna
1011, 3011 Radio resource control unit
1013, 3013 Scheduling unit
1051 Decoding unit
1053 Demodulation unit
1055, 3055 Demultiplexing unit
1057, 3057 Radio reception unit
1059, 3059 Channel measurement unit
1071, 3071 Coding unit
1073 Common channel generation unit
1075 Control channel generation unit
1077 3075 Multiplexing unit
1079, 3077 Radio transmission unit
10711 Uplink reference signal generation unit
3051 Data demodulation/decoding unit
3053 Control information demodulation/decoding unit
3073 Modulation unit
3079 Downlink reference signal generation unit

## Claims

1. A terminal apparatus comprising:
a reception unit configured to receive a common channel;
a decoding unit configured to generate an acknowledgement response based on whether a transport block in the common channel has been successfully decoded; and
a transmission unit configured to transmit uplink control information including the acknowledgement response, wherein
whether the uplink control information includes reception quality information is given at least based on the acknowledgement response, and
the reception quality information is given based on a signal received by the reception unit.

2. The terminal apparatus according to claim 1, wherein
in the case where the acknowledgement response indicates ACK, the reception quality information is not included in the uplink control information, and
in the case where the acknowledgement response indicates NACK, the reception quality information is included in the uplink control information.

3. The terminal apparatus according to claim 2, wherein
number of code points allocated with the uplink control information indicating the ACK is smaller than number of code points allocated with the uplink control information indicating the NACK.

4. The terminal apparatus according to any one of claims 1 to 3, wherein
the common channel is a first common channel,
the acknowledgement response is a first acknowledgement response,
the reception unit receives a second common channel different from the first common channel,
the decoding unit generates second acknowledgement response based on whether the transport block included in the second common channel has been successfully decoded, and
the reception quality information is generated based on a reference signal related to at least the second common channel and/or the second common channel.

5. A base station apparatus comprising:
a transmission unit configured to transmit a common channel including a transport block to a terminal apparatus; and
a reception unit configured to receive uplink control information including an acknowledgement response corresponding to the transport block from the terminal apparatus, wherein
whether the uplink control information includes reception quality information is given based on the acknowledgement response, and
the reception quality information is given based on a signal received by the terminal apparatus.

6. The base station apparatus according to claim 5, wherein
in the case where the acknowledgement response is detected as ACK, the reception quality information is not included in the uplink control information, and
in the case where the acknowledgement response indicates NACK, the reception quality information is included in the uplink control information.

7. The base station apparatus according to claim 6, wherein
number of code points allocated with the uplink control information indicating the ACK is smaller than number of code points allocated with the uplink control information indicating the NACK.

8. The terminal apparatus according to any one of claims 5 to 7, wherein
the common channel is a first common channel,
the acknowledgement response is a first acknowledgement response,
the transmission unit transmits a second common channel different from the first common channel, and
the reception quality information is given based on a reference signal related to at least the second common channel received by the terminal apparatus and/or the second common channel.

9. A communication method used for a terminal apparatus, the communication method comprising the steps of:
receiving a common channel;
generating an acknowledgement response based on whether a transport block in the common channel has been successfully decoded; and
transmitting uplink control information including the acknowledgement response, wherein
whether the uplink control information includes reception quality information is given at least based on the acknowledgement response, and
the reception quality information is given based on a signal received.

10. A communication method used for a base station apparatus, the communication method comprising the steps of:
transmitting a common channel including a transport block to a terminal apparatus; and
receiving uplink control information including an acknowledgement response corresponding to the transport block from the terminal apparatus, wherein
whether the uplink control information includes reception quality information is given based on the acknowledgement response, and
the reception quality information is given based on a signal received by the terminal apparatus.

11. An integrated circuit implemented on a terminal apparatus, the integrated circuit comprising:
a reception circuit configured to receive a common channel;
a decoding circuit configured to generate an acknowledgement response based on whether a transport block in the common channel has been successfully decoded; and
a transmission circuit configured to transmit uplink control information including the acknowledgement response, wherein
whether the uplink control information includes reception quality information is given at least based on the acknowledgement response, and
the reception quality information is given based on a signal received by the reception circuit.

12. An integrated circuit implemented on a base station apparatus, the integrated circuit comprising:
a transmission circuit configured to transmit a common channel including a transport block to a terminal apparatus; and
a reception circuit configured to receive uplink control information including an acknowledgement response corresponding to the transport block from the terminal apparatus, wherein
whether the uplink control information includes reception quality information is given based on the acknowledgement response, and
the reception quality information is given based on a signal received by the terminal apparatus.
